# FASCICULE DE BREVET EUROPEEN

(11) **EP 3 317 588 B1**
(45) Date de publication et mention de la délivrance du brevet: **14.10.2020**
(21) Numéro de dépôt: 16734404.3
(22) Date de dépôt: 04.07.2016
(51) Int. Cl.: F24F 5/00

(54) **SYSTEME DE CLIMATISATION D'UN BATIMENT**
KLIMATISIERUNGSSYSTEM EINES GEBÄUDES
AIR-CONDITIONING SYSTEM OF A BUILDING

(30) Priorité: 03.07.2015 FR 1556334
(43) Date de publication de la demande: 09.05.2018
(73) Titulaire: Bull SAS, 78340 Les Clayes-sous-Bois (FR)
(72) Inventeur: MARTINEZ, Patrice, 38100 Grenoble (FR); CAYUELA, Jacques, 38700 La Tronche (FR); ZENG EYINDANGA, Landry Stéphane, 38170 Seyssinet-Pariset (FR)
(74) Mandataire: Cabinet Camus Lebkiri
(86) Numéro de dépôt international: PCT/EP2016/065726
(87) Numéro de publication internationale: WO 2017/005701

(56) Documents cités:
- DE-A1-102011 108 601
- US-A- 4 064 706
- US-A- 4 761 965
- US-A1- 2012 174 606
- US-B1- 6 820 439

## Description

### DOMAINE TECHNIQUE DE L'INVENTION

La présente invention concerne un système de climatisation d'un bâtiment. L'invention trouve une application particulièrement intéressante dans la climatisation de bâtiments présentant une mauvaise isolation tels que des bâtiments anciens, à usage agricole ou encore industriels.

### ARRIERE PLAN TECHNOLOGIQUE DE L'INVENTION

Aujourd'hui, de nombreux systèmes de climatisation ont été développés afin de répondre à des exigences techniques de maintien en température de certains locaux (laboratoires, bloc opératoire, salle informatique), ou tout simplement pour améliorer le confort (magasin, domicile, bureaux).

Les systèmes de climatisation classiques appelés « split-systèmes » sont constitués d'une unité placée à l'intérieur d'une pièce et d'une unité placée à l'extérieur de ladite pièce. Ainsi, l'unité intérieure puise la chaleur contenue dans l'air de la pièce et l'évacue hors de la pièce par l'intermédiaire de l'unité extérieure. L'air rafraichi est ainsi réinjectée dans la pièce par l'unité intérieure. Pour ce faire, ledit système comporte un échangeur évaporateur, un compresseur, un détenteur et un échangeur condenseur. Cependant, ce type de système de climatisation présente de nombreux inconvénients. En effet, de tels systèmes sont coûteux aussi bien lors de leur installation que durant leur exploitation car ils consomment une grande quantité d'électricité. Plus encore, lorsqu'un bâtiment présente une mauvaise isolation, les coûts d'exploitation sont d'autant plus importants car une partie de l'air refroidit s'échappe à l'extérieur de la pièce. Enfin, lesdits systèmes peuvent rejeter des gaz à effet de serre pouvant donc être nocifs pour l'environnement. Le document DE-A-102011108601 décrit un système de climatisation comportant les caractéristiques du préambule de la revendication 1.

### DESCRIPTION GENERALE DE L'INVENTION

Dans ce contexte, l'invention vise à fournir une solution permettant de climatiser une pièce pour un coût d'installation et d'exploitation faibles. En outre, la solution selon l'invention est plus écologique. A cet effet, l'invention propose un système de climatisation assurant un rafraichissement d'un bâtiment par une intervention sur au moins une paroi extérieure du bâtiment considéré.

L'invention concerne ainsi essentiellement un système de climatisation selon la revendication 1.

Le système de climatisation selon l'invention permet de résoudre les problèmes préalablement cités.

En effet, l'installation d'un tel système de climatisation nécessite uniquement la réalisation de travaux à l'extérieur du bâtiment ce qui n'entraine aucune perte d'exploitation dudit bâtiment, par exemple lorsqu'il est à usage agricole ou industriel. Par ailleurs, les travaux d'installation ainsi que le matériel nécessaire à la mise en place du système de climatisation sont peu coûteux en comparaison des travaux d'installation (perçage) et l'achat du matériel pour les systèmes de climatisation traditionnels décrits précédemment. En outre, le coût d'exploitation du système de climatisation selon l'invention est faible pour peu qu'une source d'eau abondante et bon marché soit présente dans ou à proximité du bâtiment. Enfin, le système de climatisation consomme uniquement de l'eau ce qui ne présente pas de risque pour l'environnement. Avantageusement, lorsque le système de climatisation comporte une cuve de récupération de l'eau, l'eau n'ayant pas été utilisée durant le processus de refroidissement du bâtiment peut être exploitée de nouveau, par exemple, pour l'arrosage ou encore comme moyens d'alimentation en eau.

Le système de climatisation selon l'invention peut présenter une ou plusieurs des caractéristiques ci-dessous, considérées de manière non limitatives, individuellement ou selon toutes les combinaisons techniquement possibles.
- les moyens de distribution de l'eau sont au moins un premier tuyau de diamètre interne compris dans l'intervalle [12 mm ; 40mm], préférentiellement 19 mm.
- chaque second tuyau présente un diamètre interne compris dans l'intervalle [8 mm ; 30 mm], préférentiellement 13,6 mm.
- chaque ouverture présente un diamètre compris dans l'intervalle [0,5 mm ; 1,5 mm], préférentiellement 1 mm.
- les moyens de distribution de l'eau et les moyens de génération de gouttelettes d'eau forment un élément monobloc.
- les moyens d'alimentation en eau comportent une nappe phréatique.
- les moyens d'alimentation en eau comportent un moyen d'accès à l'eau courante.
- les moyens de régulation du débit de l'eau comportent une pompe.
- les moyens de régulation du débit de l'eau sont reliés à un thermostat
- les moyens de génération de gouttelettes d'eau sont reliés à des moyens de récupération de l'eau.
- la surface extérieure du bâtiment est au moins une partie du toit dudit bâtiment
- la surface extérieure du bâtiment est au moins une partie d'un mur dudit bâtiment

L'invention sera mieux comprise à la lumière de la description qui suit et en référence aux figures dont la liste est donnée ci-dessous.

### BREVE DESCRIPTION DES FIGURES

Les figures ne sont présentées qu'à titre indicatif et nullement limitatif.
La figure 1 représente schématiquement le système de climatisation positionné sur le toit d'un bâtiment selon un mode de réalisation de l'invention.
La figure 2 est un agrandissement d'une zone entourée du système de climatisation présenté à la figure 1.
La figure 3 représente schématiquement des moyens de génération de gouttelettes d'eau selon un mode de réalisation de l'invention.
La figure 4 est un diagramme en bloc illustrant des étapes du procédé de refroidissement d'un bâtiment par l'extérieur selon un mode de réalisation de l'invention.

### DESCRIPTION DETAILLEE DE MODES DE REALISATION DE L'INVENTION

Sauf précision contraire, un même élément apparaissant sur des figures différentes présente une référence unique.

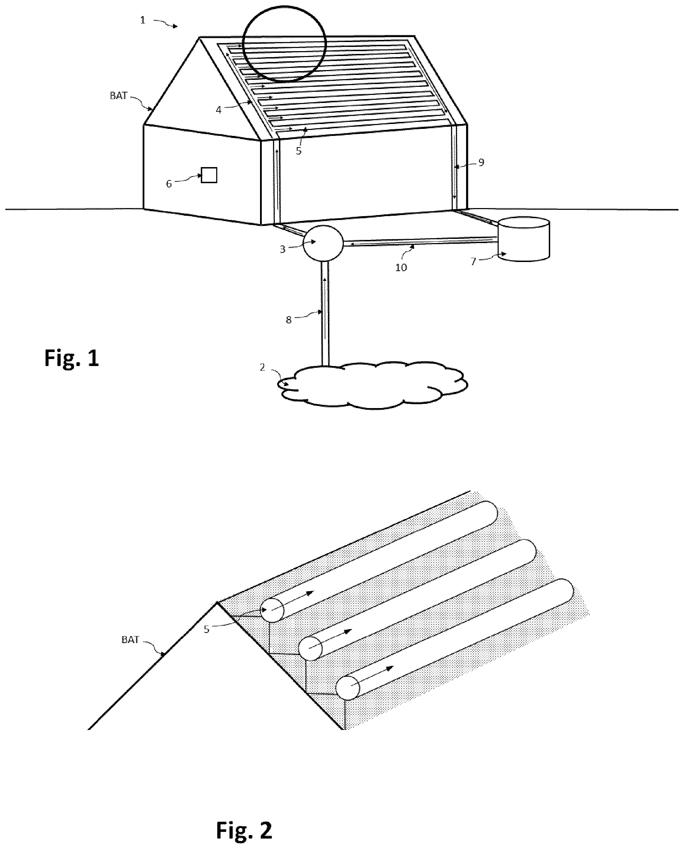

L'invention concerne un système de climatisation 1 d'un bâtiment BAT par l'extérieur. La figure 1 représente le système de climatisation 1 en position sur le toit d'un bâtiment BAT selon un mode de réalisation de l'invention. Selon un autre mode de réalisation, le système de climatisation 1 est positionné sur les murs d'un bâtiment BAT. Dans ce mode de réalisation, les murs doivent présenter une isolation contre l'humidité.

En référence à la figure 1, le système de climatisation 1 comporte :
- des moyens d'alimentation 2 en eau,
- des moyens de régulation 3 du débit de l'eau,
- des moyens de distribution 4 de l'eau,
- des moyens de génération 5 de gouttelettes d'eau,
- un thermostat 6,
- une cuve de récupération 7 de l'eau.

Les moyens d'alimentation 2 en eau sont destinés à alimenter le système de climatisation 1 en eau, préférentiellement en eau froide. Selon un mode de réalisation, les moyens d'alimentation 2 en eau sont une nappe phréatique à proximité du bâtiment d'où est puisée l'eau. La nappe phréatique est alors reliée à une première canalisation 8 qui permet l'acheminement de l'eau vers les autres composantes du système de climatisation 1. Selon un autre mode de réalisation, les moyens d'alimentation 2 en eau sont un robinet d'eau courante. Selon un autre mode de réalisation, les moyens d'alimentation 2 sont une cuve de récupération d'eau, par exemple qui récupère l'eau de pluie ou encore l'eau n'ayant pas été utilisé par lors du processus de refroidissement du bâtiment BAT.

Les moyens de régulation 3 du débit de l'eau sont destinés à pomper l'eau provenant des moyens d'alimentation 2 et de faire circuler ladite eau jusqu'au toit du bâtiment BAT pour son refroidissement. Ainsi, les moyens de régulation 3 sont reliés, par une première extrémité à la première canalisation 8 qui est connectée aux moyens d'alimentation 2. Une seconde extrémité des moyens de régulation 3 est reliée aux moyens de distribution 4 de l'eau. Par ailleurs, la pression de l'eau imposée par les moyens de régulation 3 doit être suffisante pour atteinte le toit du bâtiment BAT et ainsi optimiser le processus de refroidissement du bâtiment BAT. Selon un mode de réalisation, la pression de l'eau en sortie des moyens de régulation 3 de l'eau est comprise dans l'intervalle [1 bar ; 10 bars], préférentiellement 5 bars. Selon un mode de réalisation, les moyens de régulation 3 de l'eau sont une pompe. En outre, selon le mode de réalisation présenté à la figure 1, les moyens de régulation 3 du débit de l'eau sont positionnés à proximité du bâtiment BAT.

Les moyens de distribution 4 de l'eau sont destinés à acheminer l'eau vers le toit du bâtiment BAT, la pression de ladite eau ayant, au préalable, été régulée par les moyens de régulation 3 de l'eau. Ainsi, une première extrémité des moyens de distribution 4 de l'eau est reliée aux moyens de régulation 3 du débit de l'eau. Une seconde extrémité des moyens de distribution 4 de l'eau est reliée aux moyens de génération de gouttelettes d'eau 5. Selon un mode de réalisation, les moyens de distribution 4 de l'eau sont un premier tuyau 4 de diamètre interne compris dans l'intervalle [12 mm ; 40 mm], préférentiellement 19 mm. Selon un autre mode de réalisation, les moyens de distribution 4 de l'eau sont une pluralité de premiers tuyaux 4 répartis sur le toit du bâtiment BAT, chaque premier tuyau 4 étant relié aux moyens de régulation 3. Par ailleurs, selon un mode de réalisation, lesdits moyens de distribution 4 de l'eau sont fixés sur une surface extérieure du bâtiment BAT à l'aide de colliers de fixation fixés par vis et cheville sur le mur, et sur le toit par collage direct par plot de colle, ou fixation d'un collier ouvert de type Polychlorure de vinyle (PVC) lui aussi collé.

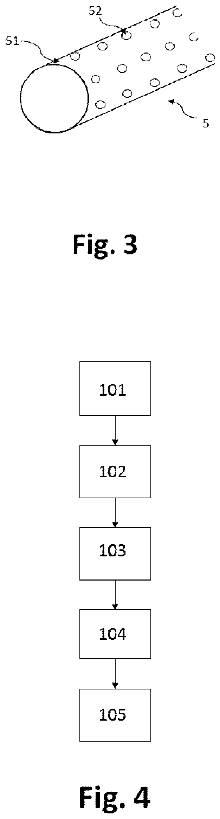

Les moyens de génération 5 de gouttelettes d'eau sont destinés à générer des gouttelettes d'eau sur le toit du bâtiment BAT. Lesdits moyens de génération 5 sont reliés, par une première extrémité, aux moyens de distribution 4 et sont positionnés fixés sur le toit du bâtiment BAT. Une seconde extrémité des moyens de génération 5 est reliée à la cuve de récupération 7. Selon le mode de réalisation présenté aux figures 1 et 2, les moyens de génération 5 de gouttelettes d'eau sont une pluralité de seconds tuyaux 51. Selon un mode de réalisation, le diamètre interne de chaque second tuyau est compris dans l'intervalle [8 mm ; 30 mm], préférentiellement 13,6 mm. Selon le mode de réalisation présenté à la figure 3, chaque second tuyau 51 comporte une pluralité d'ouvertures 52 ménagées dans la paroi dudit second tuyau 51. Les moyens de génération 5 de gouttelettes d'eau sont positionnés de sorte que les ouvertures 52 soient positionnées en regard du toit du bâtiment BAT. Selon un mode de réalisation, chaque ouverture 52 présente un diamètre compris dans l'intervalle [0,5 mm ; 1,5mm], préférentiellement 1 mm. En outre, selon un mode de réalisation, plus les ouvertures 52 des seconds tuyaux 51 sont éloignées des moyens de régulation 3, plus le diamètre desdites ouvertures 52 augmente.

Le thermostat 6 est destiné à contrôler à distance la température du bâtiment BAT par un utilisateur du système de climatisation 1. Ainsi, le thermostat 6 est relié aux moyens de régulation 3 du débit de l'eau. En effet, lorsque la pression de l'eau augmente, la température du bâtiment BAT diminue de sorte qu'une modification de la température sur le thermostat 6 induit une modification de la pression appliquée par les moyens de régulation 3. Par ailleurs, lorsqu'un utilisateur souhaite stopper la climatisation du bâtiment BAT, il peut éteindre le thermostat 6 ce qui conduit à l'arrêt des moyens de régulation 3 du débit de l'eau qui ne puise plus d'eau dans les moyens d'alimentation 2 de l'eau.

La cuve de récupération 7 de l'eau est destinée à récupérer l'eau n'ayant pas servi dans le procédé de refroidissement. La cuve de récupération 7 de l'eau est reliée aux moyens de génération 5 de gouttelettes d'eau par l'intermédiaire d'une seconde canalisation 9. Selon le mode de réalisation présenté à la figure 1, ladite cuve de récupération 7 est reliée également aux moyens de régulation 3 du débit de l'eau par l'intermédiaire d'une troisième canalisation 10 reliée à une seconde extrémité des moyens de régulation 3. Ainsi, l'eau n'ayant pas été utilisée lors du procédé de refroidissement peut être de nouveau utilisée. En outre, selon un autre mode de réalisation, l'eau contenue dans la cuve de récupération 7 est réutilisée pour l'arrosage par exemple ou encore les sanitaires. La cuve de récupération 7 permet ainsi d'éviter toute perte d'eau.

Ainsi, la première canalisation 8, la seconde canalisation 9 et la troisième canalisation 10 sont utilisés pour acheminer l'eau pour la mise en œuvre du système de canalisation 1. Selon un mode de réalisation, les canalisations 8, 9 et 10 présentent un diamètre compris dans l'intervalle [20 mm ; 50mm], préférentiellement 40 mm.

En outre, le matériau utilisé pour les moyens de distribution 4 de l'eau, les moyens de génération 5 des gouttelettes d'eau ainsi que les canalisations 8, 9, 10 est choisi de sorte à résister à de fortes pressions d'eau. Selon un mode de réalisation, ledit matériau utilisé est le polyéthylène.

La figure 4 représente les étapes du procédé de refroidissement d'un bâtiment BAT par l'extérieur selon un mode de réalisation de l'invention.

Pour rappel, dans un bâtiment BAT, un échauffement intense des surfaces exposées au soleil provoque une élévation de la température à l'intérieur dudit bâtiment BAT. On note, en outre, qu'au zénith, le soleil produit une puissance sensiblement égale à 1 kW (Kilowatt) par mètre carré.

Ainsi, selon une étape 101, l'eau contenue dans les moyens d'alimentation 2 en eau est pompée par les moyens de régulation du débit 3 de l'eau qui traverse la première canalisation 8.

Selon une étape 102, l'eau pompée par les moyens de régulation 3 est acheminée à une pression prédéterminée vers le toit du bâtiment BAT par les moyens de distribution 4 de l'eau.

Selon une étape 103, l'eau est transportée des moyens de distribution 4 vers les moyens de génération 5 de gouttelettes d'eau.

Selon une étape 104, l'eau contenue dans les moyens de génération 5 de gouttelettes d'eau traverse les ouvertures 52 desdits moyens de génération 5. Des gouttelettes d'eau sont alors générées en regard du toit du bâtiment BAT. Une partie des gouttelettes est mise en contact avec le toit surchauffé par les rayons solaires. Ainsi, une grande quantité de chaleur est absorbée par l'évaporation des gouttelettes d'eau conduisant à une diminution de la température du toit et ainsi à une baisse de la température à l'intérieur du bâtiment BAT.

Selon une étape 105, une partie de l'eau contenue dans le ou les second(s) tuyau(x) 51 des moyens de génération 5 de gouttelettes d'eau qui n'a pas traversé les ouvertures 52 est récupérée dans la cuve de récupération 7 par l'intermédiaire de la seconde canalisation 9. Selon un autre mode de réalisation, le système de canalisation 1 ne comporte pas de seconde canalisation 9, les gouttières du bâtiment BAT permettant d'acheminer l'eau jusqu'à la cuve de récupération 7.

Le système de canalisation 1 selon l'invention permet une baisse de température allant jusqu'à 7 degrés à l'intérieur du bâtiment BAT ainsi équipé.

## Revendications

1. Système de climatisation (1) d'un bâtiment (BAT) comportant:
▪ des moyens d'alimentation (2) en eau,
▪ des moyens de régulation (3) du débit de l'eau pour la régulation du débit de l'eau provenant des moyens d'alimentation (2),
▪ des moyens de distribution (4) de l'eau pour la distribution de l'eau à proximité d'une surface extérieure du bâtiment (BAT), le débit de ladite eau étant régulé par les moyens de régulation (3),
▪ des moyens de génération (5) de gouttelettes d'eau pour la génération de gouttelettes d'eau sur au moins une partie de la surface extérieure du bâtiment (BAT) à partir de l'eau provenant des moyens de distribution (4), lesdits moyens de génération (4) de gouttelettes d'eau comportant au moins un second tuyau (51) avec une pluralité d'ouvertures (52) ménagées dans une paroi de chaque au moins un second tuyau (51),
**caractérisé en ce que** le diamètre des ouvertures (52) augmente avec la distance entre chaque ouverture (52) considérée et les moyens de régulation (3).

2. Système de climatisation (1) selon la revendication 1 **caractérisé en ce que** les moyens de distribution (4) de l'eau sont au moins un premier tuyau (4) de diamètre interne compris dans l'intervalle [12 mm ; 40 mm], préférentiellement 19 mm.

3. Système de climatisation (1) selon l'une quelconque des revendications 1 à 2, **caractérisé en ce que** chaque second tuyau (51) présente un diamètre interne compris dans l'intervalle [8 mm ; 30mm], préférentiellement 13,6 mm.

4. Système de climatisation (1) selon l'une quelconque des revendications 1 à 3, **caractérisé en ce que** chaque ouverture (52) présente un diamètre compris dans l'intervalle [0,5 mm ; 1,5 mm], préférentiellement 1 mm.

5. Système de climatisation (1) selon l'une quelconque des revendications 1 à 4, **caractérisé en ce que** les moyens de distribution (4) de l'eau et les moyens de génération (5) de gouttelettes d'eau forment un élément monobloc.

6. Système de climatisation (1) selon l'une quelconque des revendications 1 à 5, **caractérisé en ce que** les moyens d'alimentation (2) en eau comportent une nappe phréatique.

7. Système de climatisation (1) selon l'une quelconque des revendications 1 à 6, **caractérisé en ce que** les moyens d'alimentation (2) en eau comportent un moyen d'accès à l'eau courante.

8. Système de climatisation (1) selon l'une quelconque des revendications 1 à 7, **caractérisé en ce que** les moyens de régulation (3) du débit de l'eau comportent une pompe.

9. Système de climatisation (1) selon l'une quelconque des revendications 1 à 8, **caractérisé en ce que** les moyens de régulation (3) du débit de l'eau sont reliés à un thermostat (6).

10. Système de climatisation (1) selon l'une quelconque des revendications 1 à 9, **caractérisé en ce que** les moyens de génération (5) de gouttelettes d'eau sont reliés à des moyens de récupération (7) de l'eau.

11. Système de climatisation (1) selon l'une quelconque des revendications 1 à 10, **caractérisé en ce que** la surface extérieure du bâtiment (BAT) est au moins une partie du toit dudit bâtiment (BAT).

12. Système de climatisation (1) selon l'une quelconque des revendications 1 à 11, **caractérisé en ce que** la surface extérieure du bâtiment (BAT) est au moins une partie d'un mur dudit bâtiment (BAT).

## Patentansprüche

1. Klimatisierungssystem (1) eines Gebäudes (BAT), umfassend:
▪ Versorgungsmittel (2) mit Wasser;
▪ Regulierungsmittel (3) des Durchsatzes des Wassers für die Regulierung des Durchsatzes des aus den Versorgungsmitteln (2) stammenden Wassers,
▪ Verteilungsmittel (4) des Wassers für die Verteilung des Wassers in der Nähe einer Außenfläche des Gebäudes (BAT), wobei der Durchsatz des genannten Wassers durch Regulierungsmittel (3) reguliert ist,
▪ Erzeugungsmittel (5) von Wassertröpfchen für die Erzeugung von Wassertröpfchen auf wenigstens einem Teil der Außenfläche des Gebäudes (BAT) ausgehend von aus den Verteilungsmitteln (4) stammendem Wasser, wobei die genannten Erzeugungsmittel (4) von Wassertröpfchen wenigstens eine zweite Röhre (51) mit einer Vielzahl von Öffnungen (52) umfassen, die in einer Wand von wenigstens jeder zweiten Röhre (51) angeordnet sind,
**dadurch gekennzeichnet, dass** der Durchmesser der Öffnungen (52) mit der Entfernung zwischen jeder betrachteten Öffnung (52) und den Regulierungsmitteln (3) steigt.

2. Klimatisierungssystem (1) gemäß Anspruch 1, **dadurch gekennzeichnet, dass** die Verteilungsmittel (4) des Wassers wenigstens eine erste Röhre (4) mit einem in dem Intervall [12 mm; 40 mm] inbegriffenen, bevorzugt 19 mm, Innendurchmesser sind.

3. Klimatisierungssystem (1) gemäß irgendeinem der Ansprüche 1 bis 2, **dadurch gekennzeichnet, dass** jede zweite Röhre (51) einen in dem Intervall [8 mm; 30 mm] inbegriffenen, bevorzugt 13,6 mm, Innendurchmesser aufweist.

4. Klimatisierungssystem (1) gemäß irgendeinem der Ansprüche 1 bis 3, **dadurch gekennzeichnet, dass** jede Öffnung (52) einen in dem Intervall [0,5 mm; 1,5 mm] inbegriffenen, bevorzugt 1 mm, Durchmesser aufweist.

5. Klimatisierungssystem (1) gemäß irgendeinem der Ansprüche 1 bis 4, **dadurch gekennzeichnet, dass** die Verteilungsmittel (4) des Wassers und die Erzeugungsmittel (5) von Wassertröpfchen ein einstückiges Element bilden.

6. Klimatisierungssystem (1) gemäß irgendeinem der Ansprüche 1 bis 5, **dadurch gekennzeichnet, dass** die Versorgungsmittel (2) mit Wasser Grundwasser umfassen.

7. Klimatisierungssystem (1) gemäß irgendeinem der Ansprüche 1 bis 6, **dadurch gekennzeichnet, dass** die Versorgungsmittel (2) mit Wasser ein Zugangsmittel zu fließendem Wasser umfassen.

8. Klimatisierungssystem (1) gemäß irgendeinem der Ansprüche 1 bis 7, **dadurch gekennzeichnet, dass** die Regulierungsmittel (3) des Durchsatzes des Wassers eine Pumpe umfassen.

9. Klimatisierungssystem (1) gemäß irgendeinem der Ansprüche 1 bis 8, **dadurch gekennzeichnet, dass** die Regulierungsmittel (3) des Durchsatzes des Wassers mit einem Thermostat (6) verbunden sind.

10. Klimatisierungssystem (1) gemäß irgendeinem der Ansprüche 1 bis 9, **dadurch gekennzeichnet, dass** die Erzeugungsmittel (5) von Wassertröpfchen mit Auffangmitteln (7) des Wassers verbunden sind.

11. Klimatisierungssystem (1) gemäß irgendeinem der Ansprüche 1 bis 10, **dadurch gekennzeichnet, dass** die Außenfläche des Gebäudes (BAT) wenigstens ein Teil des Dachs des genannten Gebäudes (BAT) ist.

12. Klimatisierungssystem (1) gemäß irgendeinem der Ansprüche 1 bis 11, **dadurch gekennzeichnet, dass** die Außenfläche des Gebäudes (BAT) wenigstens ein Teil einer Mauer des genannten Gebäudes (BAT) ist.

## Claims

1. Air-conditioning system (1) of a building (BAT) comprising:
▪ water supply means (2),
▪ water flow control means (3) for controlling the flow of water from the water supply means (2),
▪ water distribution means (4) for distributing water near an outer surface of the building (BAT), the flow of said water being controlled by the control means (3),
▪ water droplets generation means (5) for generating water droplets on at least one portion of the outer surface of the building (BAT) from the water coming from the distribution means (4), said water droplets generation means (5) comprising at least one second pipe (51) with a plurality of openings (52) provided in a wall of each at least one second pipe (51), **characterized in that** the diameter of the openings (52) increases with the distance between each opening (52) considered and the control means (3).

2. Air-conditioning system (1) according to claim 1 **characterised in that** the distribution means (4) comprise at least one first pipe (4) with an internal diameter comprised in the interval [12 mm; 40 mm], preferentially 19 mm.

3. Air-conditioning system (1) according to any of claims 1 to 2 **characterised in that** each second pipe (51) has an internal diameter comprised in the interval [8 mm; 30 mm], preferentially 13.6 mm.

4. Air-conditioning system (1) according to any of claims 1 to 3 **characterised in that** each opening (52) has a diameter comprised in the interval [0.5 mm; 1.5 mm], preferentially 1 mm.

5. Air-conditioning system (1) according to any of claims 1 to 4 **characterised in that** the water distribution means (4) and the water droplets generation means (5) form a one-piece element.

6. Air-conditioning system (1) according to any of claims 1 to 5 **characterised in that** the water supply means (2) comprise a phreatic groundwater.

7. Air-conditioning system (1) according to any of claims 1 to 6 **characterised in that** the water supply means (2) comprise means for accessing running water.

8. Air-conditioning system (1) according to any of claims 1 to 7 **characterised in that** the water flow control means (3) comprise a pump.

9. Air-conditioning system (1) according to any of claims 1 to 8 **characterised in that** the water flow control means (3) are connected to a thermostat (6).

10. Air-conditioning system (1) according to any of claims 1 to 9 **characterised in that** the water droplets generation means (5) are connected to water recovery means (7).

11. Air-conditioning system (1) according to any of claims 1 to 10 **characterised in that** the outer surface of the building (BAT) is at least one portion of the roof of said building (BAT).

12. Air-conditioning system (1) according to any of claims 1 to 11 **characterised in that** the outer surface of the building (BAT) is at least one portion of a wall of said building (BAT).
